Europäisches Patentamt

European Patent Office

Office européen des brevets

(19)

(11) Veröffentlichungsnummer: **0 278 503**

**A2**

(12) # EUROPÄISCHE PATENTANMELDUNG

(21) Anmeldenummer: 88101994.7

(51) Int. Cl.⁴: **G01M 3/16**

(22) Anmeldetag: 11.02.88

(30) Priorität: 13.02.87 DE 3704594

(43) Veröffentlichungstag der Anmeldung:
17.08.88 Patentblatt 88/33

(84) Benannte Vertragsstaaten:
**AT BE CH DE ES FR GB GR IT LI LU NL SE**

(71) Anmelder: **Westerwald AG für Silikatindustrie**
**Postfach 1120**
**D-5432 Wirges(DE)**

(72) Erfinder: **Hehl, Manfred**
**Memeler Strasse 21**
**D-5657 Haan(DE)**
Erfinder: **Schwickert, Klaus**
**Rheinstrasse 3**
**D-5434 Dernbach(DE)**
Erfinder: **Hahn, Hans**
**Provinzialstrasse 32**
**D-5401 Urbar/Rhein(DE)**

(74) Vertreter: **Wuesthoff, Franz, Dr.-Ing. et al**
**Patentanwälte Wuesthoff-v. Pechmann**
**-Behrens-Goetz-v. Hellfeld Schweigerstrasse**
**2**
**D-8000 München 90(DE)**

(54) **Vorrichtung zur Lecküberwachung und -ortung.**

(57) Bei einer Vorrichtung zur Lecküberwachung und
-ortung an isolierenden Bodenbelägen sind auf beiden Seiten (S₁, S₂) einer Bodenbelagsschicht (KS2)
jeweils streifenförmige Leiter (1-8 und A-H) kreuzweise angeordnet. Mittels einer Überwachungsschaltung werden in einer vorgegebenen Zeitfolge
paarweise jeweils Widerstandswerte zwischen einem
einzelnen Leiter auf der einen Seite und einem einzelnen Leiter auf der anderen Seite des Bodenbelages gemessen und mit in der Überwachungsschaltung abgespeicherten Soll-Werten verglichen,
um bei Abweichung des verglichenen Wertes über
vorgegebene Toleranzen hinaus ein Leck oder eine
Veränderung des Zustandes des Bodenbelages anzuzeigen. Zusätzlich zur Widerstandsmessung kann
noch eine Kapazitätsmessung vorgesehen sein.

FIG. 2

## Vorrichtung zur Lecküberwachung und -ortung

Die Erfindung betrifft eine Vorrichtung zur Lecküberwachung und -ortung an isolierenden Bodenbelägen oder dergleichen mit den Merkmalen des Oberbegriffs des Patentanspruches 1 sowie einen Bodenbelag zur Verwendung mit einer solchen Vorrichtung.

Neben Bodenbelägen kann die erfindungsgemäße Vorrichtung insbesondere auch bei der Lecküberwachung und -ortung an Flüssigkeitsbehältern eingesetzt werden. Beim Umgang mit die Umwelt belastenden Chemikalien muß dafür gesorgt werden, daß diese nicht aus den Behältern entweichen oder durch den Boden in die Erde dringen.

Als schützende Beläge für Böden und Behälterauskleidungen sind unterschiedliche Kunstharzbeschichtungen bekannt (s. z.B. die Veröffentlichungen des "Instituts für Bautechnik", Berlin, Oktober 1978, "Bau-und Prüfgrundsätze für Abdichtungen von Auffangwannen und Auffangräumen für die Lagerung wassergefährdender Flüssigkeiten aus Kunststoffbahnen").

Bei der Lecküberwachung und -ortung an derartigen isolierenden Bodenbelägen kommt es wesentlich darauf an, daß eine "Frühwarnung" erfolgt, d.h. die Überwachungsvorrichtung erfüllt ihre Aufgabe nicht, wenn sie erst dann einen Fehler anzeigt, wenn eine schädliche Chemikalie durch den Bodenbelag dringt, vielmehr muß bereits in einem sehr frühen Stadium eine Veränderung des Bodenbelages erkannt, lokalisiert und angezeigt werden.

Aus der DE-PS 33 38 723 ist eine gattungsgemäße Vorrichtung zur Lecküberwachung und Leckortung bekannt, bei der beidseitig einer zu überwachenden Bodenbelagsschicht jeweils mehrere elektrische Leiter angeordnet sind. An einen der Leiter wird ein elektrisches Hochfrequenzsignal angelegt und das durch dieses Hochfrequenzsignal in einem weiteren elektrischen Leiter induzierte Signal wird erfaßt. Das induzierte Signal wird demoduliert und aus der Änderungsgeschwindigkeit des demodulierten Signals wird eine Information über den Zustand des Bodenbelages, Behälters oder dergleichen gewonnen.

Aus der DE-OS 33 22 772 ist eine Verbundfolie zum Auskleiden von Flüssigkeitsbehältern bekannt, in die elektrische Leiter kammförmig eingebettet sind. Sobald das Isolationsmaterial zwischen den Leitern beschädigt wird, ändert sich der Widerstandswert zwischen den isolierten Leitern. Ein Mikrocomputer tastet in vorgegebenen Zeitintervallen die einzelnen Meßstellen ab und gibt bei Auftreten eines Lecks ein Alarmsignal und zeigt den Ort des Lecks an.

Der Erfindung liegt die Aufgabe zugrunde, eine Vorrichtung zur Lecküberwachung und -ortung an isolierenden Bodenbelägen oder dergleichen zu schaffen, die mit großer Zuverlässigkeit frühzeitig eine genaue Lokalisierung von Art und Umfang einer Beschädigung des Bodenbelages ermöglicht, wobei insbesondere auch allmähliche, sich über einen längeren Zeitraum hinziehende Veränderungen des Bodenbelages erkannt werden sollen.

Diese Aufgabe wird erfindungsgemäß mit einer im Patentanspruch 1 gekennzeichneten Vorrichtung gelöst.

Gemäß der Erfindung wird also mittels der Überwachungsschaltung in einer vorgegebenen Zeitfolge paarweise zumindest ein Teil von $n \times m$ Widerstandswerten zwischen jeweils einem einzelnen Leiter auf der einen Seite und einem einzelnen Leiter auf der anderen Seite einer Schicht des Bodenbelages durch Anlegen einer Spannung oder Einprägen eines Stromes gemessen und mit in der Überwachungsschaltung abgespeicherten Soll-Werten verglichen werden, um bei Abweichung der verglichenen Werte über vorgegebene Toleranzen hinaus ein Leck oder eine Veränderung des Zustandes des Bodenbelages anzuzeigen.

Eine genaue Lokalisierung der Veränderungen des Bodenbelages läßt sich in einer bevorzugten Ausgestaltung der Erfindung dadurch erreichen, daß die als Sensoren dienenden elektrischen Leiter rasterförmig den zu überwachenden Bodenbelag zwischen sich einschließen, wobei bevorzugt die elektrischen Leiter auf jeder Seite des Bodenbelages jeweils als langgestreckte, parallele Leiterbahnen ausgebildet sind und die Leiterbahnen auf der einen Seite senkrecht zu den Leiterbahnen auf der anderen Seite des Bodenbelages stehen. Hierdurch kann mit einer geringen Zahl von Leitern und Anschlüssen eine große Zahl von Meßpunkten erzeugt werden.

Eine besonders genaue Messung sowie leicht auswertbare Meßergebnisse ergeben sich dann, wenn in die elektrischen Leiter ein konstanter Gleichstrom eingeprägt und der Spannungsabfall über dem zu messenden Widerstand, also dem gerade gemessenen Bereich der Bodenbelagsschicht, gemessen wird.

In einer bevorzugten Ausgestaltung der Überwachungsschaltung werden die gemessenen Spannungen, welche den Widerstandswerten der überwachten Bereiche des Bodenbelages proportional sind, verstärkt und galvanisch getrennt über Analog/Digital-Wandler Auswerteschaltungen zugeführt. Zur Erhöhung der Sicherheit der Anlage werden die Auswerteschaltungen redundant ausgeführt, d.h. bei Ausfall eines Teils der Überwachungsschaltung wird die Lecküberwachung nicht beendet, sondern von einem anderen Teil der Überwachungsschaltung übernommen.

Auch weist die Überwachungsschaltung eine Selbst-Überwachung auf und gibt Alarm, sobald sie selbst ihre Funktion nicht mehr erfüllt. Hierzu ist insbesondere vorgesehen, daß die Durch gangswiderstandswerte der elektrischen Leiter selbst in einer vorgegebenen Zeitfolge gemessen werden. Ergibt sich bei einer derartigen Messung, daß der Stromfluß im als Sensor dienenden Leiter nicht vorschriftsmäßig ist, so wird hierdurch angezeigt, daß die Überwachungsschaltung einschließlich der Zuleitungen und der elektrischen Leiter selbst bis direkt zur Meßstelle einen Fehler aufweist. Somit ist eine weitestgehende Selbstkontrolle der Anlage gewährleistet.

In einer Weiterbildung der Erfindung ist vorgesehen, daß mittels der Überwachungsschaltung in einer vorgegebenen Zeitfolge paarweise zumindest ein Teil der Kapazitätswerte zwischen jeweils einem oder mehreren Leitern auf der einen Seite und einem oder mehreren Leitern auf der anderen Seite der zu überwachenden Bodenbelagsschicht gemessen und mit Soll-Werten verglichen werden. Bei dieser Variante der Erfindung ist also neben der Widerstandsmessung noch eine ergänzende Kapazitätsmessung vorgesehen. Das die Messung der Kapazitätswerte vorsehende Verfahren kann mit einer beliebigen Art der Messung der Widerstandswerte kombiniert werden, besonders genaue und reproduzierbare Meßergebnisse werden aber dann erhalten, wenn die Kapazitätsmessung mit dem vorstehend beschriebenen erfindungsgemäßen Verfahren bzw. einer entsprechenden Vorrichtung durchgeführt wird.

Die Kapazitätsmessung hat insbesondere dann Bedeutung, wenn nicht-leitende Chemikalien in den zu überwachenden Bodenbelag eindringen. Hierfür kommen besonders chlorierte Kohlenwasserstoffe in Betracht. Durch die zwischen die Leiter dringenden Chemikalien wird entsprechend ihrer Dielektrizitätskonstanten eine Änderung der Kapazität zwischen den Leitern bewirkt. Somit gibt die Kapazitätsmessung Aufschluß über die zwischen den Leitern vorhandenen Stoffe.

In einer bevorzugten Ausgestaltung der erfindungsgemäßen Kapazitätsmessung ist vorgesehen, daß die gemessenen Kapazitäts werte unmittelbar an den Leitern mittels eines Kapazitäts/Frequenz-Wandlers in eine Frequenz umgewandelt werden. Die der gemessenen Kapazität proportionale Meßfrequenz kann über einen nachgeschalteten Frequenz/Spannungs-Wandler in einen Spannungswert umgesetzt und mit gespeicherten Soll-Werten verglichen werden. Zeigt der Vergleich eine Abweichung von den Soll-Werten über vorgegebene Toleranzen hinaus, so zeigt dies an, daß eine Veränderung im Bodenbelag stattgefunden hat.

Es ist auch möglich, das Ausgangssignal des Kapazitäts/Frequenz-Wandlers direkt durch Frequenzzählung zu digitalisieren und mit entsprechenden Soll-Werten zu vergleichen.

Durch die Verwendung des Kapazitäts/Frequenz-Wandlers ergeben sich gegenüber bekannten Kapazitäts-Meßverfahren eine Reihe von Vorteilen: Erstens wird auch bei kleinen Kapazitätsänderungen eine hohe Auflösung und Meßgenauigkeit erzielt. Zweitens erfolgt nur eine geringe Beeinflussung des Wandlers durch hochohmige Parallelwiderstände und drittens wird durch die Umwandlung der Kapazitätswerte direkt in der Nähe der als Sensoren dienenden Leiter, d.h. an der Meßstelle, eine störsichere Fernübertragung der Meßwerte erreicht, ohne daß besondere Spezialkabel erforderlich wären. Hierzu werden kleine Kapazitäts/Frequenz-Wandler direkt an der Meßstelle vergossen.

Die Erfindung schlägt auch einen besonders geeigneten Bodenbelag zur Verwendung mit der vorstehend beschriebenen Vorrichtung vor. Es hat sich nämlich gezeigt, daß bekannte Bodenbelagsmaterialien wie Gips, Beton und Keramik für eine genaue Überwachung wenig geeignet sind, vermutlich aufgrund Ihrer hygroskopischen Eigenschaften. Auch wird bei diesen Materialien der Widerstand durch Temperatur-und Raumfeuchte stark beeinflußt.

Auch Mischungen aus hochporösen Kunststoffen und Glas/Keramikfasern weisen erhebliche Störsignale auf, so daß die Genauigkeit und Zuverlässigkeit der Messung beeinträchtigt ist.

Als besonders geeignet erwiesen hat sich aber ein Bodenbelag aus einer Mischung aus Kies, insbesondere Quarzkies, und Kunstharzlösungen. Besonders gute Meßergebnisse wurden erzielt mit Kiesmaterialien unterschiedlicher Grobkorngröße und mit einem Zweikomponenten-Gießharz, in welches die Kieskörner gemischt und eingebunden sind. Als Grobkorngröße sind Mischungen mit 50 % Anteil mit Durchmessern von 1 bis 2 mm und 50 % mit Durchmessern von 3 bis 5 mm geeignet. Der Gießharzanteil beträgt ca. 7 %.

Nachfolgend wird anhand der Zeichnung ein Ausführungsbeispiel der Erfindung näher beschrieben. Es zeigt:

Fig. 1 schematisch zwei Ausführungsformen eines Bodenbelages, bei dem eine Vorrichtung zur Lecküberwachung eingesetzt wird;

Fig. 2 schematisch eine Schicht des zu überwachenden Bodenbelags und die beidseits desselben angeordneten Leiter;

Fig. 3 ein Blockdiagramm der Vorrichtung zur Lecküberwachung;

Fig. 4 ein Blockdiagramm einer Weiterbildung des Ausführungsbeispiels gemäß Fig. 3, mit dem auch die Kapazität bestimmter Bereiche des Bodenbelags gemessen werden kann;

Fig. 5 ein Blockdiagramm einer Vorrichtung sowohl zur Widerstands als auch zur Kapazitätsmessung, und

Fig. 6 schematisch einen Bodenbelag.

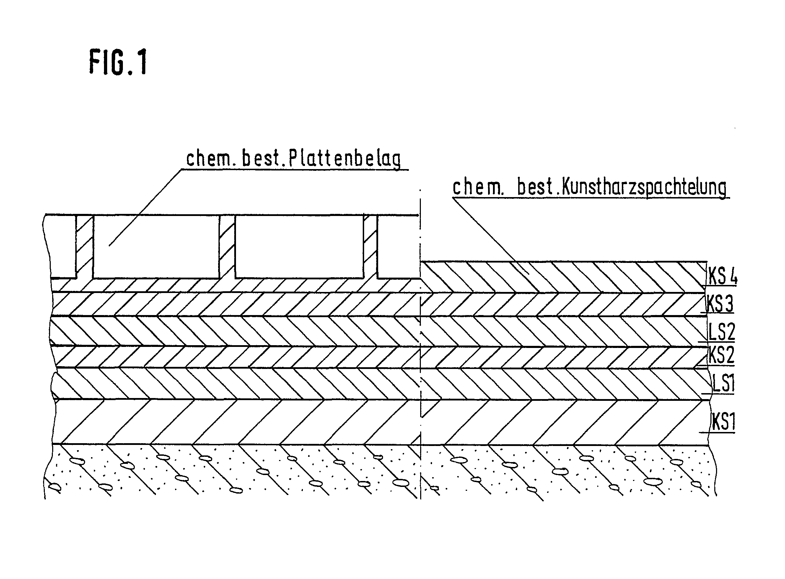

Fig. 1 zeigt schematisch zwei Ausführungsbeispiele von Bodengelägen, bei denen eine Vorrichtung zur Lecküberwachung und -ortung eingesetzt wird. Der Bodenbelag kann beispielsweise zur Auskleidung des Bodens einer chemischen Fabrik dienen. Über der Betonschicht wird eine erste Schicht KS1 in Form einer Ausgleichsspachtelung angebracht, um Unebenheiten im Beton auszugleichen. Darüber wird eine erste leitfähige Sensorschicht LS1 aufgebracht. Die leitfähige Sensorschicht LS1 besteht aus einzelnen Streifen eines leitfähigen Materials, im gezeigten Ausführungsbeispiel aus einem an sich bekannten Leitlack mit einer Stärke von ca. 100 $\mu$m. Darüber wird die elektrisch isolierende Kunststoffschicht KS2 aufgetragen. Die elektrisch isolierende Kunststoffschicht KS2 besteht aus einer Spachtelmasse mit einer Stärke von z.B. 3 mm. Es wird ein Material für die Kunststoffschicht KS2 gewählt, welches den Leitlack der Schicht LS1 nicht zerstört. Geeignet ist ein Epoxidharz.

Sodann wird die elektrisch isolierende Kunststoffschicht KS2 mittels eines an sich bekannten Porensuchgerätes geprüft, um festzustellen, ob störende Poren in der Schicht vorhanden sind. Das Porensuchgerät weist eine Vielzahl von besenförmigen Elektroden auf, die über die Schicht geführt werden. Dabei ist an die untere leitfähige Sensorschicht LS1 eine hohe Spannung (z.B. 10 bis 15 kV) angelegt, so daß bei Auftreten von Poren ein Funken zu einer der besenförmigen Elektroden durchschlägt und die Pore anzeigt.

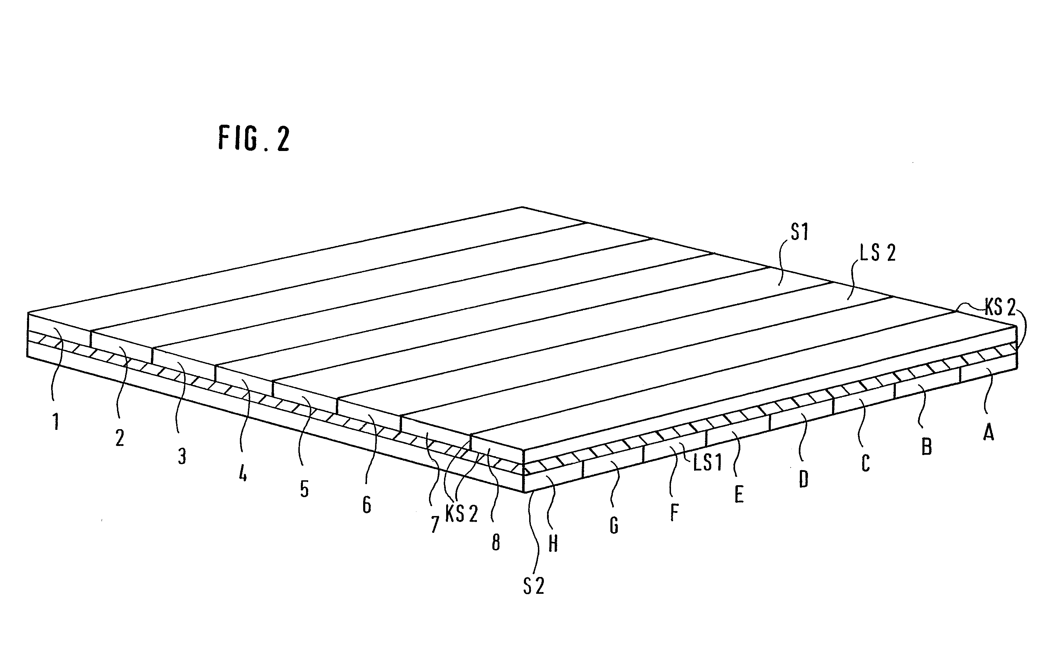

Über der elektrisch isolierenden Kunststoffschicht KS2 ist eine obere leitfähige Sensorschicht LS2 angeordnet, die der unteren leitfähigen Sensorschicht LS1 entspricht, wobei die streifenförmigen Leiterbahnen kreuzweise zueinander angeordnet sind (siehe Fig. 2).

Über der oberen leitfähigen Sensorschicht LS2 ist eine flüssigkeitsdichte Isolations-und Schutzschicht KS3 aus dem gleichen Material wie die elektrisch isolierende Kunststoffschicht KS2 angeordnet.

Schließlich folgt über der flüssigkeitsdichten Isolations-und Schutzschicht KS3 eine mechanische Schutzschicht KS4 in Form einer chemisch beständigen Kunstharzspachtelung oder auch in Form eines chemisch beständigen Plattenbelages (siehe Fig. 1 rechts bzw. links). Diese mechanische Schutzschicht KS4 ist die eigentlich zu überwachende Schicht. Dringt durch die mechanische Schutzschicht KS4 eine schädliche Substanz, so wird die elektrisch isolierende Kunststoffschicht KS2 beeinträchtigt und ändert lokal ihren Widerstandswert, was durch die Vorrichtung zur Lecküberwachung und -ortung gemäß der nachfolgenden Beschreibung angezeigt wird.

In Fig. 2 ist die Schicht KS2 des zu überwachenden Bodenbelags näher gezeigt. Auf der oberen Seite $S_1$ der Bodenbelagsschicht KS2 sind streifenförmige elektrische Leiter 1, 2, 3, 4, 5, 6, 7 und 8 angeordnet. Die elektrischen Leiter erstrecken sich parallel zueinander. Sie decken im wesentlichen die gesamte Oberfläche der Bodenbelagsschicht KS2 ab und sind untereinander durch den gleichen Kunststoff isoliert, der auch die Bodenbelagsschicht KS2 bildet.

Auf der unteren Seite $S_2$ der Bodenbelagsschicht KS2 sind elektrische Leiter A, B, C, D, E, F, G und H entsprechend den zuvor beschriebenen Leitern auf der oberen Seite $S_1$ angeordnet, allerdings um 90° gedreht, so daß sich die Leiter 1-8 auf der oberen Seite $S_1$ und die Leiter A-H auf der unteren Seite $S_2$ kreuzen.

Durch die rasterartige Anordnung der Leiter ist eine gute Ortung von Schwachstellen des Bodenbelages mit einer geringen Anzahl von Leitern möglich. Die sich kreuzenden Leiter bilden ein zwei-dimensionales Koordinatensystem, wobei in den Kreuzungspunkten der Leiter jeweils der Bereich der Bodenbelagsschicht liegt, dessen Widerstandswert mittels dieser beiden, sich kreuzenden Leiter gemessen wird.

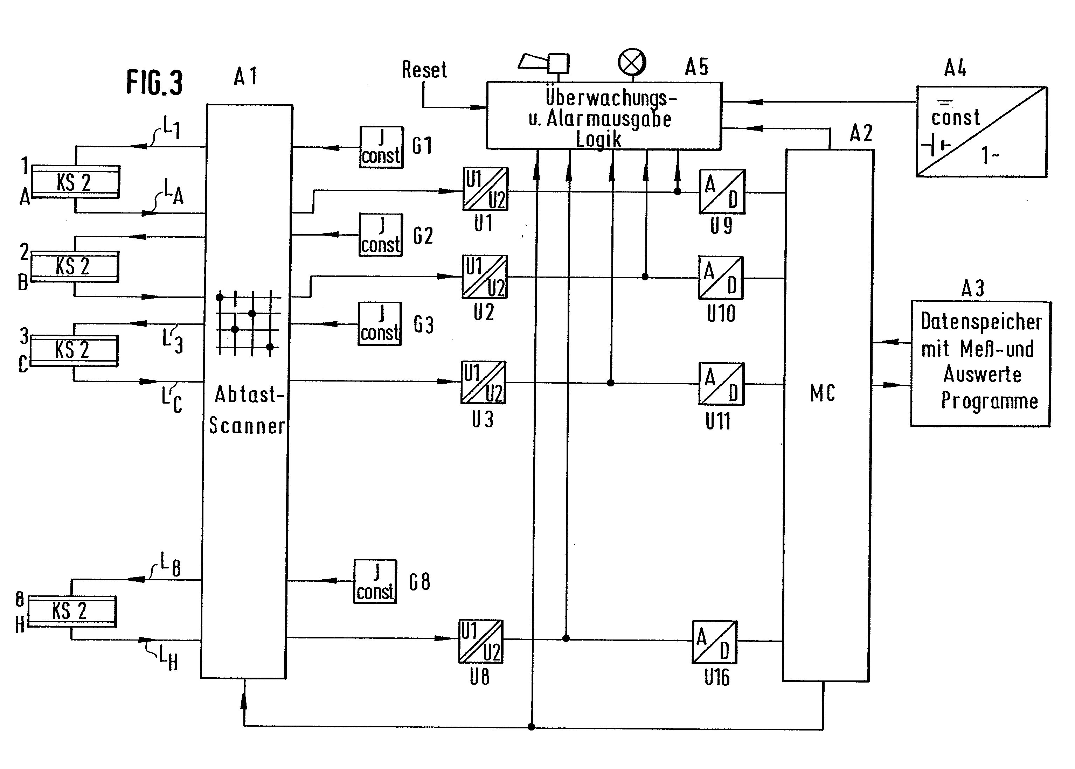

Fig. 3 zeigt eine Überwachungsschaltung zur Beschaltung der Leiter 1-8 und A-H gemäß Fig. 2.

Bei einem Überwachungszyklus werden die Widerstandswerte zwischen je einem Leiter der Unterseite $S_2$ und einem Leiter der Oberseite $S_1$ gemessen, also beispielsweise wird der Widerstandswert zwischen Leiter 1 und Leiter A, 1 und B, 1 und C, ... 1 und H bestimmt. Sodann werden die einzelnen Widerstandswerte zwischen Leiter 2 und allen Leitern A-H der Unterseite $S_2$ gemessen etc. Insgesamt ergeben sich auf diese Weise $8 \times 8 = 64$ Meßwerte, wenn die Zahl n der elektrischen Leiter 1-8 der Oberseite $S_1$ gleich 8 ist und die Zahl m der elektrischen Leiter A-H der Unterseite $S_2$ ebenfalls gleich 8 ist.

Nach der Ermittlung dieser 64 Meßpunkte werden am Ende eines Meßzyklus (oder auch an dessen Anfang) die einzelnen Leiter 1-8 und A-H zusätzlich noch auf ihren Durchgangswiderstandswert hin geprüft. Es wird also der elektrische Widerstandswert aller Leiter zwischen ihren Enden ermittelt. Diese Prüf-Messung ergibt zusätzlich 16 Meßwerte, so daß bei einem Meßzyklus insgesamt 80 Meßwerte gewonnen werden, falls m = n = 8 ist.

Gemäß Fig. 3 sind die Leiter 1-8 und A-H über einen sogenannten Scanner A1 mit den übrigen Schaltkreisen der Überwachungsschaltung verbunden. Die Leiter $L_1$-$L_8$ und $L_A$-$L_H$ verbinden gemäß Fig. 3 die als Sensor dienenden Leiter 1-8 bzw. A-H mit dem Abtast-Scanner A1.

Der als solcher bekannte Scanner hat im dargestellten Ausführungsbeispiel eine Logikschaltung für die Abtastung von 80 Meßpunkten, dabei wird der Takt durch den Mikrocomputer A2 und bei dessen Ausfall durch die Überwachungs-Logikschaltung A5 gegeben.

Beim ersten Abtastschritt wird eine Konstantstromquelle G1 an die Leiter 1 und A angeschlossen. Somit wird ein konstanter Gleichstrom zwischen die Leiter 1 und H eingeprägt. Die durch den Gleichstrom erzeugte Spannung am Widerstand zwischen den Leitern 1 und A ist dem Widerstandswert direkt proportional. Diese am zu messenden Widerstand abfallende Spannung wird gemessen und in den Trennverstärker U1 eingegeben, wo die Spannung galvanisch getrennt und verstärkt wird.

Die den Trennverstärker U1 verlassende Ausgangsspannung wird gemäß Fig. 3 einmal an die Überwachungs-Logikschaltung A5 und zum anderen über den Analog/Digital-Wandler U9 auf den ersten Kanal der Eingangsschnittstelle eines Mikrocomputers A2 gegeben.

Mit A 4 ist eine Stromversorgung bezeichnet.

In der Überwachungs-Logikschaltung A5 wird das Ausgangssignal des Trennverstärkers U1 in einem Fensterdiskriminator mit vorgegebenen Grenzwerten verglichen. Fällt der Meßwert (also das Ausgangssignal des Trennverstärkers U1) aus dem Rahmen des vorgegebenen Fensters, so wird hierdurch angezeigt, daß der gemessene Widerstandswert vom Soll-Wert um mehr als eine vorgegebene Toleranz abweicht.

Die Überwachungs-Logikschaltung A5 und der Mikrocomputer A2 sind weitgehend redundante Systeme.

Auch im Mikrocomputer A2 erfolgt eine Auswertung des gemessenen Widerstandswertes (also des Ausgangssignales des Trennverstärkers U1). Der Mikrocomputer verarbeitet den Meßwert gemäß einem im Datenspeicher A3 abgelegten Meß-und Auswertprogramm. Dabei wird der gemessene Widerstandswert mit einem vorgegebenen Soll-Wert verglichen und Über-und Unterschreitungen vorgegebener Toleranzen werden festgestellt. Anschließend wird der Meßwert abgespeichert.

Diese Vorgänge werden für jeden der oben genannten 64 Meßwerte wiederholt, wobei nacheinander die Konstantstromquellen G2-G8, die Trennverstärker U2-U8 und die Analog/Digital-Wandler U10-U16 eingesetzt werden.

Anschließend werden die weiteren 16 Messungen der Durchgangs-Widerstandswerte der einzelner Leiter 1-8 und A-H, wie oben beschrieben, durchgeführt. So wird beispielsweise bei der 65-igsten Messung die Konstantstromquelle G1 an den Anfang und das Ende des Leiters 1 gelegt. Die sich dabei ergebende Meßspannung entspricht dem Durchgangswiderstandswert dieses Leiters. Die Meßspannung gelangt über den Trennverstärker U1 zur Überwachungs-Logikschaltung A5 und gleichzeitig über den Analog/Digital-Wandler U9 auf den ersten Eingangskanal der Schnittstelle des Mikrocomputers A2. Auch diese Meßspannung wird mit einem Soll-Wert verglichen und abgespeichert.

Nach einem vollständigen Meßzyklus sind somit beim gezeigten Ausführungsbeispiel insgesamt 80 Widerstands-Meßwerte gemessen, verglichen und abgespeichert worden.

Die im Datenspeicher A3 des Mikrocomputers A2 abgespeicherten Meßwerte können jederzeit auf einem Bildschirm sichtbar gemacht werden. Außerdem können die Meßwerte mit einem Drucker oder Plotter ausgegeben bzw. graphisch dargestellt werden.

Wie vorstehend beschrieben, werden eine Vielzahl von Widerstandswerten von einzelnen, eng begrenzten Bereichen des Bodenbelages an genau lokalisierten Stellen gemessen und verarbeitet. Darüberhinaus werden auch die als Sensoren dienenden Leiter 1-8 und A-H selbst daraufhin geprüft, ob bei Anlegen der Konstantstromquellen G1 bis G8 Spannungen über den Leitern abfallen, die vorgegebenen Soll-Werten entsprechen. Hierdurch ist eine weitgehende Selbstüberwachung der Überwachungsschaltung A1-A5, G1-G8 und U7-U16 gegeben. Es wird also nicht nur dann ein Alarm von der Überwachungs-Logikschaltung A5 oder dem Mikrocomputer A2 abgegeben, wenn die Widerstandswerte der einzelnen Meßpunkte des Bodenbelages KS um vorgegebene Toleranzen von vorgegebenen Soll-Werten abweichen, sondern es wird auch dann ein Alarm gegeben, wenn die Überwachungsschaltung selbst versagt.

Die im Speicher des Mikrocomputers A2 abgespeicherten Meßwerte werden zur Langzeitspeicherung im Datenspeicher A3 abgelegt.

Als Datenspeicher A3 ist beispielsweise eine Diskette geeignet. Ein solcher Datenträger (Diskette) kann entfernt von der Lecküberwachungsvorrichtung in einem Computer ausgewertet werden, wobei die gespeicherten Daten neben den Widerstands-Meßwerten auch genaue Angaben über die Meßorte und den Meßzeitraum enthalten. Somit kann eine langfristige Beobachtung des zu überwachenden Bodenbelages erfolgen und es können sowohl plötzlich als auch allmählich auftretende Widerstandsänderungen sicher erkannt werden. Insbesondere die allmählich, also in längeren Zeiträumen, auftretenden Änderungen am Bodenbelag, die durch Alterung, Temperaturschwankungen oder sehr schwache Lecks bedingt sind, können genau verfolgt werden.

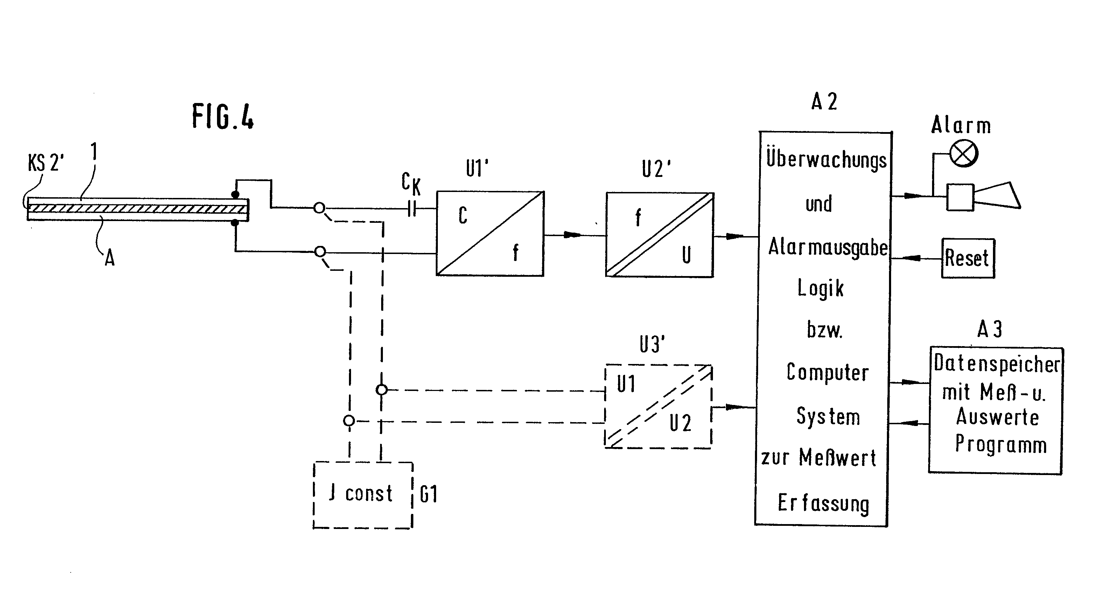

Fig. 4 zeigt eine Weiterbildung des vorstehend beschriebenen Ausführungsbeispiels (Fig. 2 und 3), wobei einander entsprechende Bauteile mit gleichen Bezugszeichen versehen sind. Gezeichnet sind beispielhaft nur zwei Leiter 1 und A, zwischen denen die Schicht KS2 angeordnet ist (welche weiter unten noch näher beschrieben werden wird).

Die beiden Leiter 1 und A bilden einen Kondensator. Die dazwischen angeordnete isolierende Kunststoffschicht KS2 bildet ein Dielektrikum. Die mittels eines Spannungswandlers $U_3'$ gemessene Kapazität zwischen den Leitern 1 und A wird über einen Koppelkondenator $C_K$ einem Kapazitäts/Frequenz-Wandler $U_1'$ zugeführt. Dieser wandelt den Kapazitätswert in eine proportionale Frequenz um. Die gemessene Frequenz wird über einen nachgeschalteten Frequenz/Spannungs-Wandler $U_2'$ in einen analogen Spannungswert umgesetzt, welcher in den Mikrocomputer $A_2$ eingegeben wird. Dort erfolgt ein Vergleich mit zuvor abgespeicherten Soll-Werten, die einem intakten Bodenbelag entsprechen. Ist die Abweichung größer als vorgegebene Toleranzen, so wird ein entsprechendes Alarmsignal erzeugt.

Dringt eine Flüssigkeit in die Bodenbelagsschicht KS2', so wird das Dielektrikum zwischen den Leitern 1 und A verändert, wodurch sich wiederum die Kapazität des aus den Leitern 1 und A gebildeten Kondensators ändert. Auf diese Weise können ergänzend zu den oben beschriebenen Widerstandsmessungen auch nicht leitenden Flüssigkeiten nachgewiesen werden. Das Ausgangssignal des Kapazitäts/Frequenz-Wandlers $U_1'$ kann auch mittels eines Frequenzzählers direkt in ein digitales Signal umgewandelt und mit entsprechenden Soll-Werten verglichen werden.

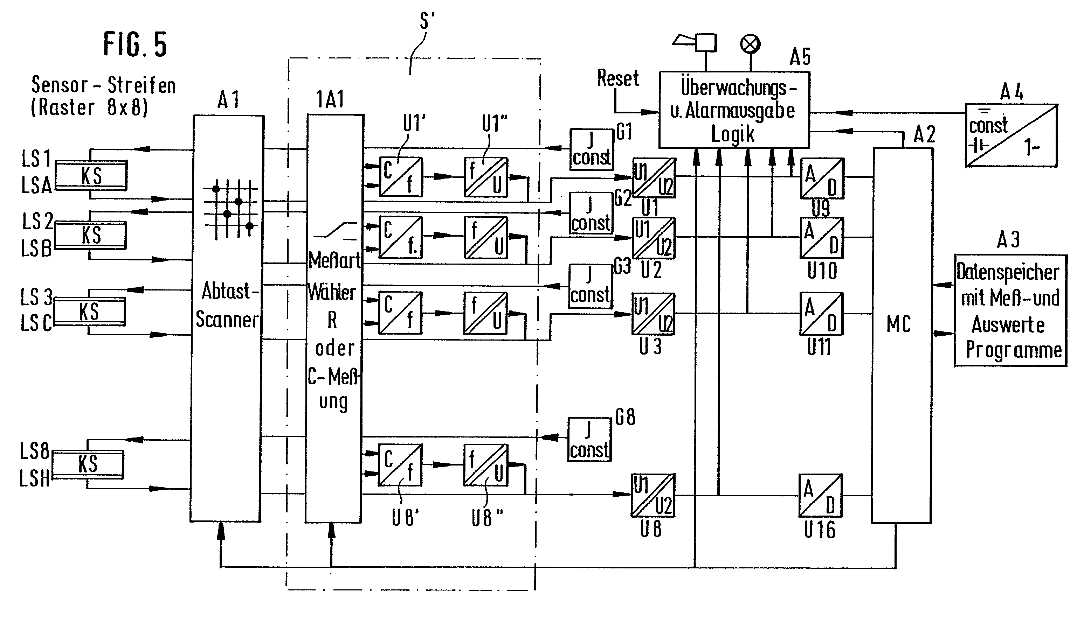

Fig. 5 zeigt ein Fig. 3 entsprechendes Blockschaltbild, bei dem ergänzend zu Fig. 3 noch die Schaltungsmittel eingezeichnet sind, mit denen zusätzlich zur Widerstandsmessung eine Kapazitätsmessung durchgeführt werden kann. Einander entsprechende Schaltungsteile sind mit gleichen Bezugszeichen versehen, so daß insoweit auf die Beschreibung zu Fig. 3 verwiesen werden kann. Im gestrichelt eingefaßten Block S' sind die zusätzlichen Schaltungsmittel für die Kapazitätsmessung aufgeführt, die weitgehend anhand der Fig. 4 schon beschrieben worden sind. Durch eine zusätzliche Umschaltvorrichtung 1A1 werden die über den Abtast-Scanner A1 geschalteten Leiterstreifen 1 bis 8 und A bis H wahlweise auf die oben beschriebene (Fig. 3) Meßeinrichtung, bestehend aus den Konstantstromquellen G1 bis G8 und den Trennverstärkern U1 bis U8, oder auf die Kapazitätsmeßeinrichtung, bestehend aus den Kapazitäts/Frequenz-Wandlern $U_1'$ bis $U_8'$ und den Frequenz/Spannungs-Wandlern $U_1''$ bis $U_8''$, geschaltet.

Zunächst werden also die Widerstände zwischen den Leitern wie oben beschrieben, d.h. Leiter 1 gegen A bis H fortlaufend bis Leiter 8 gegen Leiter A bis H, gemessen (64 Meßwerte). Sodann werden die Kapazitätswerte gemessen, allerdings anders als die Widerstandswerte derart, daß jeweils paarweise Leiter 1 gegen A bis Leiter 8 gegen H gemessen wird (8 Meßwerte). Anschliessend werden noch die Durchgangswiderstände der einzelnen Leiterstreifen, d.h. die Widerstände zwischen den Anfängen und Enden der Leiter gemessen (16 Meßwerte).

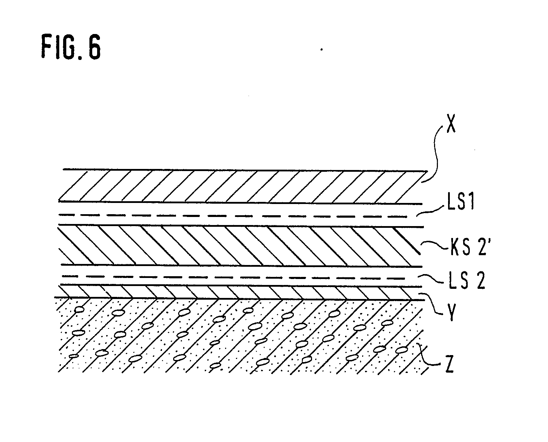

Fig. 6 zeigt einen für die Verwendung mit der vorstehend beschriebenen Vorrichtung besonders geeigneten Boden. Unter einem flüssigkeitsdichten Säureschutzbelag X ist die leitfähige Sensorschicht LS1 (siehe oben) angeordnet. Darunter befindet sich eine sogenannte Drainschicht aus einer Mischung aus Quarzkies und Kunststoffspachtelmassen (Kunstharzlösungen). Es wurden Kiesmaterialien unterschiedlicher Grobkorngröße (50 %) mit 1 bis 2 mm Durchmesser und 50 % mit 3 bis 5 mm Durchmesser mit einem Zweikomponentengießharz vermischt und eingebunden. Der Gießharzanteil beträgt ca. 7 %.

Unter der "Drainschicht" KS2' ist die zweite Leiterschicht LS2 angeordnet, welche auf einer Ausgleichspachtellage Y angeordnet ist, die auf den Beton Z aufgetragen ist.

Mit einer derart gestalteten Schicht KS2' können die Kapazitätsmessungen sehr empfindlich durchgeführt werden und durch einleckende Flüssigkeit verursachte Kapazitätsänderungen mit einer Toleranz von nur 5 % bestimmt werden.

Der in Fig. 6 gezeigte Bodenbelag ermöglicht eine Ausgestaltung, die ergänzend zu den vorstehend beschriebenen Widerstands-und Kapazitätsmessungen eine weitere Verbesserung der Sicherheit ermöglicht. Hierzu ist die untere Leiterschicht LS2 aus mehreren Leitern, z.B. parallel liegenden Leiter-Streifen ausgebildet, die aus einem Material bestehen, welches bei Kontakt mit einer gefährlichen Flüssigkeit wie z.B. organischen Lösungsmitteln, Kohlenwasserstoffen, Chlor-Kohlenwasserstoffen, Kraftstoff oder dergleichen seine elektrischen Eigenschaften, wie insbesondere seinen elektrischen Widerstand ändert. Diese Änderung des elektrischen Widerstandes kann ganz einfach dadurch erfolgen, daß das Leiter-Material sich bei Kontakt mit der Flüssigkeit auflöst, so daß sich der Durchgangswiderstand durch den Leiter erheblich ändert. Derartige leitfähige Lacke, die bei Kontakt mit organischen Lösungsmitteln sich auflösen, sind bekannt. Als Leit-Lack, der bei Kontakt mit organischen Lösungsmitteln seinen elektrischen Widerstand ändert, kommt besonders Acrylharz in Frage, welches zunächst in Toluol an gelöst wird, wobei elektrisch leitfähige Nickeloxid-Teilchen oder Kupferoxid-Teilchen eingemischt werden. Als leitfähiges Pulver, welches in das Acrylharz eingemischt wird, ist auch leitfähiger Ruß gut geeignet. Bei Kontakt mit einem organischen Lösungsmittel ändert das Acrylharz mit den eingelassenen leitfähigen Teilchen sehr empfindlich seinen elektrischen Widerstand, auch wenn es vom Lösungsmittel nur angelöst wird. Dem Fachmann sind auch andere Leitlacke bekannt.

Die in Fig. 6 gezeigte Anordnung mit einer Drainschicht KS2' ist für eine solche Ausgestaltung des Bodenbelages besonders geeignet, weil in die Drainschicht eindringende Flüssigkeiten weitflächig verteilt werden. Die Flüssigkeiten kommen deshalb sehr weitflächig in Kontakt mit der darunter liegenden Leiterschicht LS2 und lösen dort die einzelnen Leiter-Streifen an oder sogar auf, so daß ihr elektrischer Widerstand sich erheblich ändert oder sogar, bei völligem Auflösen des Leiter-Materials, unendlich groß wird.

Es ist mit der vorstehend beschriebenen Anordung sogar möglich, die Leiterschicht so auszugestalten, daß sie selektiv auf bestimmte Flüssigkeiten reagiert. Das Material der sich bei Kontakt mit eindringender Flüssigkeit auflösenden Leiter-Streifen kann selektiv so gewählt werden, daß eine Änderung der elektrischen Eigenschaften nur bei Kontakt mit bestimmten Flüssigkeiten erfolgt, mit anderen in Frage kommenden Flüssigkeiten aber nicht. Auf diese Weise kann aus der Änderung der elektrischen Widerstandswerte der einzelnen Leiter-Streifen sowohl eine Information über den Ort des Lecks als auch über die Art der eindringenden Flüssigkeit gewonnen werden.

Die vorstehend beschriebene Ausbildung des Bodenbelages kann sowohl in Kombination mit der oben beschriebenen Kapazitäts-und Widerstandsmessung als auch für sich alleine verwendet werden. Die höchste Sicherheit wird bei Kombination aller Ver fahren erreicht. Je nach Einsatzort kann es aber auch schon genügen, alleine eine aus auflösungsfähigen Leiter-Streifen bestehende Leiterschicht unter dem Schutzbelag anzuordnen und periodisch deren Durchgangswiderstand zu messen.

## Ansprüche

1. Vorrichtung zur Lecküberwachung und -ortung an isolierenden Bodenbelägen oder dergleichen mit:
- einer Mehrzahl von n elektrischen Leitern (1-8), die mit einer Bodenbelagsschicht (KS2) auf deren einer Seite ($S_1$) in Kontakt sind,
- einer Mehrzahl von m elektrischen Leitern (A-H), die mit der Bodenbelagsschicht (KS2) auf deren anderer Seite ($S_2$) in Kontakt sind,
- einer elektronischen Überwachungsschaltung (A1-A5, G1-G8, U1-U16), mit der wahlweise Spannungen an die Leiter anlegbar sind, um den elektrischen Widerstand ausgewählter Bereiche der Bodenbelagsschicht zu messen,
dadurch **gekennzeichnet**,
daß mittels der Überwachungsschaltung (A1-A5, G1-G8, U1-U16) in einer vorgegebenen Zeitfolge paarweise zumindest ein Teil der n $\times$ m Widerstandswerte zwischen jeweils einem einzelnen Leiter (1-8) auf der einen Seite ($S_1$) und einem einzelnen Leiter (A-H) auf der anderen Seite ($S_2$) der Bodenbelagsschicht (KS2) durch Anlegen einer Spannung zwischen diese Leiter oder Einprägen eines Stromes gemessen und mit in der Überwachungsschaltung abgespeicherten Soll-Werten verglichen wird, um bei Abweichung der verglichenen Werte über vorgegebene Toleranzen hinaus ein Leck oder eine Veränderung des Zustandes des Bodenbelages anzuzeigen.

2. Vorrichtung nach Anspruch 1,
dadurch **gekennzeichnet**,
daß die elektrischen Leiter (1-8, A-H) auf jeder Seite ($S_1$, $S_2$) der Bodenbelagsschicht (KS2) jeweils als langgestreckte, parallele Leiterbahnen ausgebildet sind und daß die Leiterbahnen auf der einen Seite senkrecht zu den Leiterbahnen auf der anderen Seite der Bodenbelagsschicht stehen.

3. Vorrichtung nach einem der Ansprüche 1 oder 2,
dadurch **gekennzeichnet**,
daß die Widerstandswerte derart gemessen werden, daß in die Leiter (1-8, A-H) ein konstanter Gleichstrom eingeprägt und der Spannungsabfall über dem zu messenden Widerstand gemessen wird, wobei die den Widerstandswerten proportionalen, gemessenen Spannungen verstärkt und galvanisch getrennt über Analog/Digital-Wandler (U9-U16) Auswerteschaltungen (MC und/oder A5) zugeführt werden.

4. Vorrichtung nach einem der vorhergehenden Ansprüche,
dadurch **gekennzeichnet,**
daß mittels der Überwachungsschaltung in einer vorgegebenen Zeitfolge paarweise zumindest ein Teil der Kapazitätswerte zwischen jeweils einem oder mehreren Leitern (1-8) auf der einen Seite

(S$_1$) und einem oder mehreren Leitern (A-H) auf der anderen Seite (S$_2$) der Bodenbelagsschicht (KS2') gemessen und mit Soll-Werten verglichen werden, und daß die Überwachungsschaltung einen Umschalter (1A1) aufweist, so daß wahlweise eine Widerstands-oder eine Kapazitätsmessung durchführbar ist.

5. Vorrichtung nach Anspruch 4,
dadurch **gekennzeichnet,**
daß die gemessenen Kapazitätswerte in einem Kapazitäts-Frequenz-Wandler (U$_1'$ ) in eine Frequenz gewandelt werden.

6. Vorrichtung nach Anspruch 5,
dadurch **gekennzeichnet,**
daß der Kapazitäts-Frequenz-Wandler (U$_1'$ ) benachbart den elektrischen Sensor-Leitern (1-8 bzw. A-H) angeordnet ist.

7. Bodenbelag, insbesondere zur Verwendung mit einer Vorrichtung gemäß einem der vorhergehenden Ansprüche,
**gekennzeichnet** durch
einen flüssigkeitsdichten Schutzbelag (X), unter dem zumindest eine Leiterschicht (LS2) angeordnet ist, die mehrere Leiter aus einem Material aufweist, welches bei Kontakt mit durch den Schutzbelag (X) dringenden Flüssigkeiten, wie organischen Lösungsmitteln, insbesondere Kohlenwasserstoffen, Chlor-Kohlenwasserstoff, Kraftstoff oder dergleichen, seine elektrischen Eigenschaften, wie insbesondere seinen elektrischen Widerstand, ändert.

8. Bodenbelag nach Anspruch 7,
dadurch **gekennzeichnet,**
daß oberhalb der Leiterschicht (LS2) und unter dem Schutzbelag (X) eine poröse Schicht (KS2') angeordnet ist, welche eine in sie eindringende Flüssigkeit weitflächig auf die darunter liegende Leiterschicht (LS2) verteilt.

9. Bodenbelag nach einem der Ansprüche 7 oder 8,
dadurch **gekennzeichnet,**
daß die Leiterschicht (LS2) mehrere Leiter aufweist, die selektiv bei Kontakt mit unterschiedlichen Flüssigkeiten ihre elektrischen Eigenschaften in Abhängigkeit von der Art der Flüssigkeit ändern.

# FIG.1

chem. best. Plattenbelag

chem. best. Kunstharzspachtelung

KS 4
KS 3
LS 2
KS 2
LS 1
KS 1

# FIG. 2

FIG.3

A1 — Abtast-Scanner

A5 — Überwachungs- u. Alarmausgabe Logik

Reset

A4 — const 1~

A2 — MC

A3 — Datenspeicher mit Meß- und Auswerte Programme

1 A — KS 2  L1  LA
2 B — KS 2
3 C — KS 2  L3  LC
8 H — KS 2  L8  LH

G1 — J const
G2 — J const
G3 — J const
G8 — J const

U1 — U1/U2
U2 — U1/U2
U3 — U1/U2
U8 — U1/U2

U9 — A/D
U10 — A/D
U11 — A/D
U16 — A/D

0 278 503

FIG. 4

FIG. 5

Sensor - Streifen
(Raster 8x8)

S'

A1  1A1  U1'  U1''  Reset  Überwachungs-
u. Alarmausgabe
Logik  A5

A4
const
1~

LS1
LSA  KS

LS2
LSB  KS

Abtast-
Scanner

Meßart
Wähler
R
oder
C-Meß
ung

C/f  f/U  J const  G1

U1/U2  U1  A/D  U9

A2

LS3
LSC  KS

C/f.  f/U  J const  G2

U1/U2  U2  A/D  U10

U1/U2  U3  A/D  U11

MC

A3
Datenspeicher
mit Meß-und
Auswerte
Programme

C/f  f/U  J const  G3

LS8
LSH  KS

C/f  f/U  J const  G8

U8'  U8''  U1/U2  U8  A/D  U16

0 278 503

FIG. 6